(19) Europäisches Patentamt
European Patent Office
Office européen des brevets

(11) **EP 4 574 514 A1**

(12) **EUROPÄISCHE PATENTANMELDUNG**

(43) Veröffentlichungstag:
**25.06.2025   Patentblatt 2025/26**

(21) Anmeldenummer: 24220204.2

(22) Anmeldetag: **16.12.2024**

(51) Internationale Patentklassifikation (IPC):
**B60L 1/00** *(2006.01)*     **B60L 50/70** *(2019.01)*
**B60L 53/53** *(2019.01)*     **B60L 53/54** *(2019.01)*
**B60L 53/57** *(2019.01)*

(52) Gemeinsame Patentklassifikation (CPC):
**B60L 1/006; B60L 1/00; B60L 50/70; B60L 53/53;
B60L 53/54; B60L 53/57;** B60L 2200/26;
B60L 2200/28

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **21.12.2023   AT 510422023**

(71) Anmelder: **Plasser & Theurer Export von
Bahnbaumaschinen
Gesellschaft m.b.H.
1010 Wien (AT)**

(72) Erfinder:
• **Folie, Georg
4048 Puchenau (AT)**
• **Ringer, Thomas
4600 Wels (AT)**
• **Buchner, Markus
4040 Linz (AT)**

(54) **MOBILE ENERGIEBEREITSTELLUNGSVORRICHTUNG**

(57)     Die Erfindung betrifft eine mobile Energiebereitstellungsvorrichtung (1) zur Bereitstellung von elektrischer Energie für mindestens einen elektrischen Verbraucher (2), der Teil eines Schienenfahrzeuges (3) insbesondere eines Schienenfahrzeugverbundes (4) ist, mit einer Energieübertragungsvorrichtung (5), eingerichtet zur Übertragung der elektrischen Energie von der mobilen Energiebereitstellungsvorrichtung (1) zu dem mindestens einem elektrischen Verbraucher (2), wobei in einem ersten Modul (6A) ein erster Energiespeicher (7A) angeordnet ist, ein zweites Modul (6B) einen ersten Energiewandler (8A) zur Umwandlung nichtelektrischen Energie des Energiespeichers (7A) in elektrische Energie umfasst und in einem dritten Modul (6C) ein zweiter Energiespeicher (7B) und ein zweiter Energiewandler (8B) zur Umwandlung der Stromart und/oder der Wechselstromfrequenz und/oder des Spannungsniveaus und/oder der Stromstärke der elektrischen Energie und zusätzlich eine Sicherheitsvorrichtung (9A, 9C, 9D) zur Überwachung eines zulässigen Betriebsbereichs der mobilen Energiebereitstellungsvorrichtung (1) und eine Kommunikationsvorrichtung (9B) zur Steuerung der Energieübertragung mittels des Energieübertragungsvorrichtung (5) angeordnet sind.

## Fig. 2

**Beschreibung**

Die Erfindung betrifft eine mobile Energiebereitstellungsvorrichtung zur Bereitstellung von elektrischer Energie für mindestens einen elektrischen Verbraucher, der Teil eines Schienenfahrzeuges, insbesondere eines Schienenfahrzeugverbundes ist, mit einer Energieübertragungsvorrichtung, eingerichtet zur Übertragung der elektrischen Energie von der mobilen Energiebereitstellungsvorrichtung zu dem mindestens einem elektrischen Verbraucher.

Die Umstellung der Fahrzeugantriebstechnologie von Verbrennungskraftmaschinen, die die Umwandlungsprodukte des aus organischen Verbindungen bestehenden Kraftstoffs emittieren, auf im Betrieb emissionsfreie elektrische Antriebsaggregate wird durch gesellschaftliche Forderungen motiviert und durch staatliche, regionale und internationale Regelungen und Vereinbarungen vor allem in hochentwickelten Ländern mit hohem Verkehrsaufkommen gefördert und sanktioniert.

Die Bereitstellung und Speicherung der Energie für den Betrieb elektrischer Antriebe beschäftigt in diesem Zusammenhang sowohl Forschungseinrichtungen als auch die für die Entwicklung neuer Fahrzeugkonzepte zuständigen Entwicklungsabteilungen.

Ist auf Schienenfahrwegen und in Schienennetzwerken keine kontinuierliche Versorgung mit elektrischer Energie über parallel zum Gleiskörper geführten Oberleitungen oder Stromschienen vorhanden, so ist die Erzeugung von elektrischer Energie aus Wasserstoff oder wasserstoffhaltigen Verbindungen eine Möglichkeit der Bereitstellung elektrischer Energie für elektrische Verbraucher und insbesondere elektrische Antriebe eines Schienenfahrzeugs.

Eine Wasserstoffversorgung von Schienenfahrzeugen, insbesondere wenn es sich dabei um Maschinen für den Gleisbau oder die Gleisinstandhaltung handelt, wird jedoch aufgrund einzuhaltender technischer Randbedingungen und zu berücksichtigender logistischer Anforderungen erschwert.

So sind Wasserstofflager zum Betanken eines am Schienenfahrzeug angeordneten Wasserstoffspeichers entweder gar nicht oder in nicht ausreichender Anzahl entlang der Schienenfahrwege eines Schienennetzwerks vorhanden.

Im Gegensatz zu bereits weitgehend standardisierten Betankungsvorrichtungen bei herkömmlichen Kraftstoffen gibt es weiters, insbesondere betreffend elementaren Wasserstoff, eine hohe Anzahl unterschiedlicher Lösungen für eine Kraftstoffübertragung und die Steuerung dieses Kraftstoffflusses von einem in der Umgebung des Schienenfahrwegs angeordneten Kraftstofflager in einen schienenfahrzeugseitigen Kraftstoffspeicher.

Die Lagerung des elementaren Wasserstoffs auf Schienenfahrzeugen, in deren Aggregate teilweise betriebsgemäß Vibrationen erzeugt werden, wie das bei Stopfaggregaten oder Gleisstabilisatoren der Fall ist, erfordert darüber hinaus die Einhaltung von einschlägigen Schutz- und Sicherheitsanforderungen.

Bei Verbänden aus mehr als einem Schienenfahrzeug werden schließlich vergleichsweiße lange Rohrleitungen zur Übertragung des Kraftstoffs von einem Maschinenaggregat zu einem anderen Maschinenaggregat benötigt.

Eine Lösungsmöglichkeit, um diesen technischen Randbedingungen und logistischen Herausforderungen zu begegnen, ist eine Energiebereitstellungseinrichtung auf einem Schienenfahrzeug, insbesondere einem an einem Triebwagen angekoppelten Anhänger anzuordnen.

Im Stand der Technik offenbart DE 10 2019 213 662 A1 ein Verfahren und ein Schienenfahrzeug zur Durchführung von Gleisarbeiten.

Das Schienenfahrzeug besteht aus einem Triebwagen und einem angekoppelten Anhänger. Der Triebwagen besitzt einen elektrischen Traktionsantrieb für den Fahrbetrieb am Schienenfahrweg und eine Bearbeitungseinrichtung zum Bearbeiten eines Abschnitts des Schienenfahrwegs.

Im angekoppelten Anhänger befindet sich eine Energieversorgungseinrichtung hoher Kapazität, die eine am Triebwagen befindliche Energiespeichereinrichtung kleinerer Baugröße und geringerer Kapazität lädt, die mit dem elektrischen Traktionsantrieb verbunden ist. Durch diese Anordnung kann der Fahrbetrieb des Schienenfahrzeugs auch bei Streckenabschnitten ohne elektrische Versorgung aufrechterhalten werden.

Der Erfindung liegt die Aufgabe zugrunde für eine mobile Energiebereitstellungsvorrichtung der genannten Art eine Verbesserung gegenüber dem Stand der Technik anzugeben.

Erfindungsgemäß wird diese Aufgabe gelöst durch eine Energiebereitstellungsvorrichtung nach Anspruch 1.

Abhängige Ansprüche geben vorteilhafte Ausgestaltungen der Erfindung an.

Eine mobile Energiebereitstellungsvorrichtung ist erfindungsgemäß vorgesehen zur Bereitstellung von elektrischer Energie für mindestens einen elektrischen Verbraucher, der Teil eines Schienenfahrzeuges, insbesondere eines Schienenfahrzeugverbundes ist, mit einer Energieübertragungsvorrichtung, eingerichtet zur Übertragung der elektrischen Energie von der mobilen Energiebereitstellungsvorrichtung zu dem mindestens einem elektrischen Verbraucher, wobei in einem ersten Modul ein erster Energiespeicher angeordnet ist, ein zweites Modul einen ersten Energiewandler zur Umwandlung nichtelektrischen Energie des Energiespeichers in elektrische Energie umfasst und in einem dritten Modul ein zweiter Energiespeicher und ein zweiter Energiewandler zur Umwandlung der Stromart und/oder der Wechselstromfrequenz und/oder des Spannungsniveaus und/oder der Stromstärke der elektrischen Energie und zusätzlich eine Sicherheitsvorrichtung zur Überwachung eines zulässigen Betriebsbereichs der mobilen Energiebereitstellungsvorrichtung und eine Kommunikationsvorrichtung zur Steuerung der Energieübertragung mittels der Energieübertragungsvorrichtung angeordnet sind.

Die Stromart kann dabei Gleichstrom, Wechselstrom oder Mischstrom sein.

Typische Frequenzen im Bereich des Bahnwechselstroms sind 50 Hz aber auch 50/3 Hz, was $16\frac{2}{3}$ Hz oder näherungsweise 16,7 Hz entspricht.

Zentrale Energieversorgungen in Schienenfahrzeugverbunden von Vollbahnen, die elektrische Verbindungsvorrichtungen wie beispielsweise eine einpolige Zugsammelschiene verwenden, werden oft auch mit 22 Hz oder 60 Hz betrieben, um Überlagerungen mit Sicherungsvorrichtungen des Schienenfahrwegs wie Gleisstromkreisen zu vermeiden und somit fehlerhafte Gleisfreimeldungen zu verhindern.

Weiters gibt es auch Bahnstromsysteme mit Wechselstromfrequenzen von 33 Hz und 40 Hz.

In einer vorteilhaften Ausgestaltung ist der erste Energiespeicher der mobile Energiebereitstellungsvorrichtung ein Tank, der elementaren Wasserstoff und/oder eine wasserstoffhaltige Verbindung und/oder einen anderen Kraftstoff im gasförmigen oder flüssigen Aggregatzustand enthält.

Wasserstoffhaltige chemische Verbindungen sind dabei beispielsweise Methanol oder Ammoniak.

Die Befüllung dieses Tanks kann über Vorrichtungen nach dem Stand der Technik erfolgen.

Vorzugsweise erfolgt die Befüllung des Tanks mit Betankungsvorrichtungen, die Volumenströme des Kraftstoffes von $1m^3/s$ bereitstellen können.

Eine alternative Ausführungsform sieht vor, den leeren Tank durch einen vollen Tank zu ersetzen.

Der erste Energiewandler dieser mobilen Energiebereitstellungsvorrichtung ist bevorzugt eine Brennstoffzelle nach dem Stand der Technik.

In einer alternativen Ausführungsform ist der erste Energiewandler eine Kombination aus Verbrennungskraftmaschine und elektrischem Generator.

Eine kompakte Ausführungsform dieser Kombination ist beispielsweise ein Freikolben-Lineargenerator.

Ist der eingesetzte Kraftstoff eine wasserstoffhaltige Verbindung wie Methanol, so ist es günstig, wenn zwischen dem ersten Energiespeicher und der Brennstoffzelle ein Reformer angeordnet ist, der dazu vorgesehen ist aus den wasserstoffhaltigen Verbindungen elementaren Wasserstoff zu erzeugen.

Bevorzugterweise ist der zweite Energiewandler ein Gleichstromwandler, der dazu vorgesehen ist das Spannungsniveau am Ausgang des zweiten Energiespeichers, der insbesondere eine Batterie oder eine andere Speichervorrichtung zur Speicherung elektrischer Energie nach dem Stand der Technik ist, in jenes Spannungsniveau umzuwandeln, das für den mindestens einen Verbraucher, der am Schienenfahrzeug insbesondere am Schienenfahrzeugverbund angeordnet ist, erforderlich ist.

In einer bevorzugten Variante wird der Gleichstromwandler durch einen Wechselrichter entweder ergänzt oder ersetzt.

Es ist vorteilhaft, wenn die Energieübertragungsvorrichtung ein elektrisches Verbindungskabel ist.

Alternativ umfasst die Energieübertragungsvorrichtung eine elektrische Verbindungsvorrichtung eines Schienenfahrzeugs, insbesondere eines Schienenfahrzeugverbundes nach dem Stand der Technik und/oder sowohl eine Koppelvorrichtung des Schienenfahrzeugs, auf dem die Energiebereitstellungsvorrichtung angeordnet ist, als auch eine Koppelvorrichtung des Schienenfahrzeuges, auf dem mindestens ein elektrischer Verbraucher und/oder elektrischer Speicher angeordnet sind.

Koppelvorrichtungen sind dabei beispielsweise Digitale Automatische Kupplungen DAK nach dem Stand der Technik.

Koppelvorrichtungen können alternativ auch Koppelvorrichtungen sein, bei denen die übertragbare elektrische Leistung höher als bei der DAK nach dem Stand der Technik ist, um die Übertragung des gleichen Ausmaßes von elektrischer Energie in kürzeren Zeiträumen zu ermöglichen.

In einer vorteilhaften Ausführungsform der Erfindung ist ein dritter Energiespeicher zwischen dem schienenfahrzeugseitigen Ende der Energieübertragungsvorrichtung und dem mindestens einem elektrischen Verbraucher auf dem Schienenfahrzeug, insbesondere Schienenfahrzeugverbund angeordnet. Mit diesem System ist eine besonders effiziente Versorgung des Schienenfahrzeugs möglich.

Es ist günstig, wenn die Sicherheitsvorrichtung der mobilen Energiebereitstellungsvorrichtung mit einer Messwerterfassungsvorrichtung ausgestattet ist, die Messwerte von Betriebsgrößen, wie beispielsweise Temperaturwerte der Energiebereitstellungsvorrichtung selbst und ihrer Teilvorrichtungen, sowie Kapazität und Ladezustand der Energiespeicher erfasst.

Vorzugsweise ist die Kommunikationsvorrichtung der mobilen Energiebereitstellungsvorrichtung derart ausgestaltet, dass sie mit Hilfe der Messwerte der Messwerterfassungsvorrichtung und/oder weiterer charakteristischer Kennwerte wie Nennspannung und/oder Nennstrom und/oder Nennfrequenz und/oder einstellbarer Parameter wie Energieübertragungszeit und/oder Übertragungsleistung, die Energieübertragung zum mindestens einen elektrischen Verbraucher des Schienenfahrzeugs insbesondere Schienenfahrzeugverbundes mittels der Energieübertragungsvorrichtung steuert.

In einer bevorzugten Variante des Erfindungsgegenstands ist die mobile Energiebereitstellungsvorrichtung im inneren eines Behälters insbesondere eines Containers mit Standardabmessungen angeordnet.

Zur Versorgung mindestens eines elektrischen Verbrauchers des Schienenfahrzeugs, insbesondere des Schienenfahrzeugverbundes, ist dieser Behälter vorzugsweise entweder auf einem Straßenfahrzeug oder auf einem Schienenfahrzeug, beispielsweise einem angekoppelten Anhänger einer Schienenfahrzeugverbundes, angeordnet.

Alternativ ist dieser Behälter auf einem Fahrzeug angeordnet, dessen Fahrwerkkomponenten sowohl für die Benutzung von Straßen als auch von Schienenfahrwegen eingerichtet sind.

Die Erfindung wird nachfolgend in beispielhafter Weise unter Bezugnahme auf die beigefügten Figuren erläutert. Es zeigen in schematischer Darstellung:

Fig. 1    Wasserstofftank, Brennstoffzelle, Batterie und DC/DC-Wandler in einem Container gemäß einer ersten Ausführungsform der erfindungsgemäßen mobilen Energiebereitstellungsvorrichtung,

Fig. 2    Eine schematische Darstellung einer weiteren Ausführungsform der erfindungsgemäßen mobilen Energiebereitstellungsvorrichtung mit den in drei Modulen angeordneten Komponenten und einer Energieübertragungsvorrichtung,

Fig. 3    Ein Schienenfahrzeugverbund aus zwei Gleisbaumaschinen auf einem Abschnitt des Schienenfahrwegs, der mit einer Oberleitung ausgestattet ist,

Fig. 4    Der Schienenfahrzeugverbund gemäß Figur 3, der um ein weiteres Schienenfahrzeug mit der in einem Container angeordneten Energiebereitstellungsvorrichtung erweitert ist und mit auf allen drei Schienenfahrzeugen angeordneten Energiespeichern,

Fig. 5    Ein Straßenfahrzeug mit der in einem Container angeordneten Energiebereitstellungsvorrichtung,

Fig. 6    Ein für den Betrieb auf Schienenfahrwegen ausgestattetes Straßenfahrzeug mit der in einem Container angeordneten Energiebereitstellungsvorrichtung, die mittels eines Verbindungskabels mit einem Schienenfahrzeug verbunden ist,

Fig. 7    Die Energiebereitstellungseinrichtung auf einem schienenfahrwegseitigen ortsfesten Fundament, die mittels des Verbindungskabels mit einem Schienenfahrzeug verbunden ist.

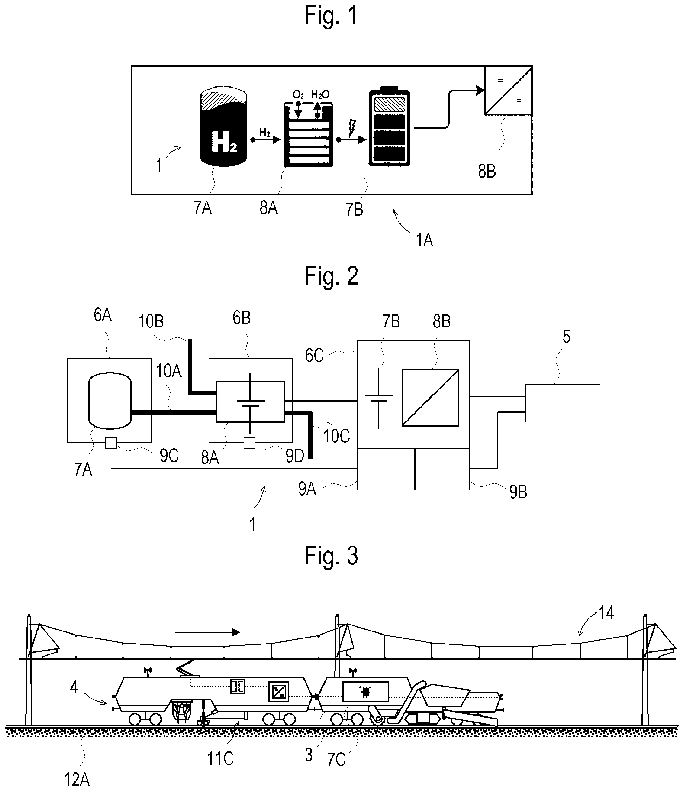

In Figur 1 ist eine erste Ausführungsform der erfindungsgemäßen mobilen Energiebereitstellungsvorrichtung 1, deren für die Energiespeicherung und Energiewandlung wesentlichen Komponenten 7A, 7B, 8A und 8B in einem Behälter 1A angeordnet sind, schematisch dargestellt.

Der elementare Wasserstoff $H_2$ ist dabei in einem Tank 7A gelagert und wird bei Betrieb zu einer Brennstoffzelle 8A geleitet, wo er mit Sauerstoff $O_2$ unter Abgabe von Elektronen derart in Wasser $H_2O$ umgewandelt wird, dass elektrische Energie durch die Brennstoffzelle 8A bereitgestellt werden kann.

Diese elektrische Energie wird in einer Batterie 7B gespeichert und bei Bedarf nach dieser gespeicherten elektrischen Energie werden mittels eines DC-DC-Wandlers 8B das Spannungspotential und/oder die verfügbare Stromstärke am Ausgang der Batterie 7B an die Anschlusswerte eines elektrischen Verbrauchers 2 angepasst.

Figur 2 stellt eine gegenüber Figur 1 detailliertere Anordnung der Komponenten 7A, 7B, 8A und 8B der Energiebereitstellungsvorrichtung 1 in drei Modulen 6A, 6B und 6C dar.

Ergänzend werden außerdem eine Sicherheitsvorrichtung 9A einschließlich einer Messwerterfassungsvorrichtung 9C und 9D, eine Kommunikationsvorrichtung 9B und ein Verbindungskabel 5 dargestellt.

Im ersten Modul 6A ist ein Behälter 7A, insbesondere ein Tank, für den Kraftstoff, beispielsweise elementaren Wasserstoff $H_2$, Methan $CH_4$, Methanol $CH_3OH$ oder andere wasserstoffhaltige Verbindungen im flüssigen oder gasförmigen Aggregatzustand, gemeinsam mit einer Messwerterfassungsvorrichtung 9C angeordnet.

Die Messwerterfassungsvorrichtung 9C ist dabei vorgesehen Betriebsgrößen wie die Temperatur $T$ und/oder den Druck $p$ des im Behälter 7A angeordneten Kraftstoffs zu erfassen.

Über eine Leitungsverbindung 10A wird der Kraftstoff vom ersten Modul 6A in das zweite Modul 6B geleitet.

Im diesem zweiten Module 6B ist in einer ersten Variante eine Brennstoffzelle 8A angeordnet, in der der vom ersten Modul 6A zur Verfügung gestellten Kraftstoff, insbesondere elementarer Wasserstoff $H_2$, und einem über die Leitung 10B zugeführten weiteren Reaktionspartner, beispielsweise Luft oder elementarer Sauerstoff $O_2$, zu einem oder mehreren Reaktionsprodukten, insbesondere Wasser $H_2O$, umgewandelt werden, wobei ein Teil der ursprünglich vorhandenen chemischen Bindungsenergie am Ausgang der Brennstoffzelle 8A als elektrische Energie zur Verfügung steht.

In einer weiteren Variante besteht der Energiewandler 8A aus einer Kombination aus einem Reformer, der elementaren Wasserstoff $H_2$ aus einem wasserstoffhaltigen Kraftstoff wie Methanol $CH_3OH$ erzeugt und diesem einer Brennstoffzelle, deren prinzipielle Funktion in der ersten Ausführungsvariante beschrieben wurde, zuführt.

Die Reaktionsprodukte, beispielsweise Wasser $H_2O$ werden über die Leitung 10C aus dem zweiten Module 6B abgeführt. In einer Variante werden die Reaktionsprodukte teilweise oder gänzlich aufbereitet und gemeinsam mit den über die Leitungen 10A und 10B zugeführten Ausgangsedukten dem Energiewandler 8A erneut zugeführt.

Mittels einer Messwerterfassungsvorrichtung 9D werden ähnlich wie im Modul 6A, wesentliche Betriebsgrößen des Energiewandlers 8A, insbesondere die Temperatur T, erfasst.

Die elektrische Energie wird über eine elektrische Leitung vom zweiten Modul 6B in ein drittes Modul 6C übertragen und einem zweiten Energiespeichers 7B, der, als eine Anordnung aus Batterien oder Akkumulatoren, vorgesehen ist, elektrische Energie zu speichern, zugeführt.

Die Sicherheitsvorrichtung 9A überwacht die Einhaltung vorgegebener Betriebsgrenzen von Betriebsgrößen beim Wandeln und Speichern der Energie. Dazu werden der Sicherheitsvorrichtung 9A auch die mit den Messwerterfassungsvorrichtungen 9C und 9D erfassten Betriebsgrößen der in den ersten beiden Modulen 6A und 6B angeordneten Komponenten 7A und 8A zur Verfügung gestellt.

In einer nicht dargestellten Variante können auch weitere Betriebsgrößen, beispielsweise Temperatur und/oder Druck der Ausgangsedukte und der Reaktionsprodukte in den Leitungen 10A, 10B und 10C mittels einer erweiterten Messwerteerfassungsvorrichtung 9C, 9D ermittelt und der Sicherheitsvorrichtung 9A zur Verarbeitung zur Verfügung gestellt werden.

Schließlich werden auch Betriebsgrößen der im Modul 6C angeordneten Komponenten 7B und 8B erfasst und können von der Sicherheitsvorrichtung 9A weiterverarbeitet werden.

Im dritten Modul ist weiters ein zweiter Energiewandler 8B angeordnet, der dazu vorgesehen ist die im Energiespeicher 7B gespeicherte elektrische Energie an die Erfordernisse eines über das Verbindungskabel 5 angeschlossenen elektrischen Verbrauchers 2 anzupassen.

Eine solche Anpassung betrifft typischerweise das elektrische Spannungsniveau und/oder die elektrische Stromstärke zwischen dem Ausgang des elektrischen Energiespeichers 7B und dem Eingang elektrischen Verbrauchers 2.

Eine Kommunikationsvorrichtung 9B ist dazu vorgesehen, die Energieübertragung zu steuern, die mittels einer Energieübertragungsvorrichtung 5 von der Energiebereitstellungsvorrichtung 1 zum elektrischen Verbraucher 2, der auf einem Schienenfahrzeug 3, 11B, 11C oder einem Schienenfahrzeugverbund 4 angeordnet ist, erfolgt.

Die Kommunikationseinrichtung 9B zieht dazu gegebenenfalls durch die Messwerterfassungsvorrichtungen 9C, 9D erfasste Betriebsgrößen oder weitere durch die Sicherheitsvorrichtung 9A festgestellte Betriebszustände heran.

Aufgrund in der Energiebereitstellungseinrichtung 1 hinterlegten Bedingungen und den erfassten Betriebsgrößen und festgestellten Betriebszuständen kann die Kommunikationseinrichtung 9B beispielsweise die Zeitdauer $T_L$ und/oder die elektrische Stromstärke $I_L$ und/oder das elektrische Spannungsniveau $U_L$ und/oder die Stromart und/oder die Wechselstromfrequenz f der elektrischen Energieübertragung von der Energiebereitstellungsvorrichtung 1 zum elektrischen Verbraucher 2 steuern.

Figur 3 zeigt einen Schienenfahrweg 12A, bei dem die Schwellen eines Gleisrostes auf einem Oberbau aufliegen, der eine Schotterschicht umfasst. Der dargestellte Streckenabschnitt 12A ist mittels einer Oberleitungsanlage 14 durchgehend elektrifiziert.

Somit kann der Energiespeicher 7C, der auf dem ersten Schienenfahrzeug 3 eines Schienenfahrzeugverbundes 4 angeordnet ist über den Stromabnehmer des zweiten Schienenfahrzeugs 11C im Schienenfahrzeugverbund 4, über einen Energiewandler, der als Transformator ausgeführt ist, und über einen Energiewandler, der im vorliegenden Ausführungsbeispiel die elektrischen Wechselgrößen am Transformatorausgang gleichrichtet, sowie eine elektrische Verbindungsleitung, die über die Koppelvorrichtungen der beiden Schienenfahrzeuge geführt wird, zwischen den beiden Schienenfahrzeugen geladen werden.

Dabei ist das erste Schienenfahrzeug 3 ein semiautonomer Schotterpflug zur Verteilung von Schotter und zur Reinigung der oberen Lagen der Schotterschicht, während das zweite Schienenfahrzeug 11C des Schienenfahrzeugverbundes 4 eine Gleisbaumaschine mit einem Stopfaggregat und einem Hebe- und Richtaggregat ist, die eine fehlerhafte Gleislage durch Umlagerung der Schotterauflage unterhalb der Schwellen richtigstellt.

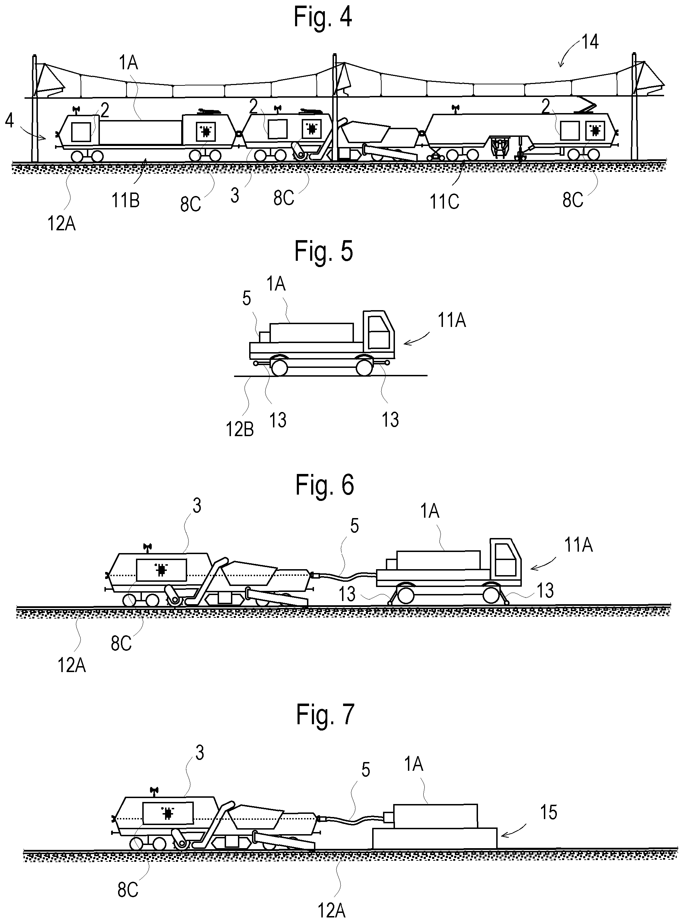

In Figur 4 ist in einer weiteren Variante der Schienenfahrzeugverbunds 4 aus einem ersten Schienenfahrzeug 3 und einem zweiten Schienenfahrzeug 11C mit einem Schienenfahrzeug 11B erweitert.

In dieser dargestellten Variante weisen allen drei Schienenfahrzeuge 3, 11B und 11C des Schienenfahrzeugverbundes 4 Energiespeicher 8C auf.

Auf jedem Schienenfahrzeug 3, 11B und 11C ist auch ein elektrischer Verbraucher 2 angeordnet. Dieser elektrische Verbraucher 2 kann beispielsweise ein elektrisches Antriebsaggregat sein, das für die Traktion des Schienenfahrzeugverbundes 4 oder der einzelnen Schienenfahrzeuge 3, 11B und 11C genutzt wird oder das andere Arbeitsaggregate antreibt, die auf den als Gleisbaumaschinen eingesetzten Schienenfahrzeugen 3, 11B und 11C eingesetzt werden.

Auf dem Schienenfahrzeug 11B ist dabei die Energiebereitstellungsvorrichtung 1 in einem Behälter 1A, der als Container ausgeführt ist, angeordnet und kann dazu verwendet werden über ein Verbindungskabel 5 elektrische Energie an die elektrischen Verbraucher 2 und die Energiespeicher 8C des Schienenfahrzeugverbundes 4 zu übertragen, wenn in dem zu bearbeitenden Streckenabschnitt des Schienenfahrweges 12B keine Stromversorgung über eine Oberleitungsanlage 14 und einen Stromabnehmer zur Verfügung steht.

Figur 5 zeigt ein Straßenfahrzeug 11A auf einer Straße 12B auf dessen Ladefläche ein Container 1A mit der Energiebereitstellungsvorrichtung 1 untergebracht ist.

An der Außenseite dieses Containers auf der der Fahrerkabine abgewandten Seite der Ladefläche ist weiters ein Gehäuse für das Verbindungskabel 5 angebracht.

Mittels dieses Straßenfahrzeugs 11A kann der Container 1A von einem Produktions- oder Wartungsbetrieb oder von einer Anlage die den Kraftstoff, insbesondere elementaren Wasserstoff H$_2$, zur Verfügung stellt, über eine Straßennetz 12B zu einem Schienenfahrweg 12A transportiert werden.

Das Straßenfahrzeug 11A ist mit aus der horizontalen Ruhelage verstellbaren Zusatzfahrwerken 13 ausgestattet.

Werden diese Zusatzfahrwerke 13 durch Einnehmen einer aktiven Position derart verstellt, dass die Schienenräder, die an den unteren Enden dieser Zusatzfahrwerke 13 angeordnet sind, die Fahrbahn einer Straße 12B oder die Schienen eines Schienenfahrwegs 12A berühren, so ruht das Straßenfahrzeug 11A nicht mehr ausschließlich auf seinen Straßenrädern.

Somit kann das Straßenfahrzeug 11A, auch auf einem Schienenfahrweg 12B abgestellt oder betrieben werden, wie es beispielhaft in Figur 6 dargestellt ist.

Während das Fahrzeug 11A auf seinen Fahrwerken mit Schienenrädern 13 auf dem Schienenfahrweg 12B abgestellt ist, ist die im Container 1A untergebrachte Energiebereitstellungseinrichtung 1 mittels des Verbindungskabels 5 und die Koppelvorrichtung des Schienenfahrzeugs mit einem Schienenfahrzeug 3 verbunden, um Energie von der Energiebereitstellungseinrichtung 1 zu dem Energiespeicher 8C des Schienenfahrzeugs zu übertragen.

In einer weiteren erfindungsgemäßen Variante, die in Figur 7 dargestellt ist, ist der Container 1A, der die Energiebereitstellungseinrichtung 1 enthält, auf einer Vorrichtung 15 der Infrastruktur des Schienenfahrwegs 12A angeordnet.

Eine solche Vorrichtung 15 ist beispielsweise streckenseitig bereits vorhanden oder sie wird gleichzeitig mit Errichtung und Betrieb eines Gleisbauabschnittes errichtet und nach Fertigstellung der Gleisbaumaßnahmen wieder abgebaut. Es handelt sich dabei beispielsweise um einen Sockel aus Beton oder einem anderen Baustoff, auf dem der Container 1A abgestellt und fixiert werden kann.

Ein Schienenfahrzeug 3 kann in dieser Ausführungsvariante in der Nähe der stationären schienenseitigen Anordnung aus Container 1A und Sockel 15 abgestellt werden und mittels des Verbindungskabels 5 kann elektrische Energie von der im Container 1A untergebrachten Energiebereitstellungsvorrichtung 1 an den Energiespeicher 8C, der am Schienenfahrzeug 3 angeordnet ist, übertragen werden.

Die dargestellten Ausführungsbeispiele stellen nur einige mögliche Varianten des Erfindungsgegenstandes dar.

Durch die Ansprüche sind weitere Kombinationen von Schienenfahrzeugen 3, 11A, 11B, 11C in der Form von Schienenfahrzeugverbünden 4 mitumfasst, ebenso wie weitere Möglichkeiten die Energiebereitstellungsvorrichtung 1 mittels der Energieübertragungsvorrichtung 5 mit den elektrischen Verbrauchern 2 und den Energiespeichern 8C, die auf den Schienenfahrzeugen 3, 11A, 11B angeordnet sind, zusammenzuschalten.

**Patentansprüche**

1. Mobile Energiebereitstellungsvorrichtung (1) zur Bereitstellung von elektrischer Energie für mindestens einen elektrischen Verbraucher (2), der Teil eines Schienenfahrzeuges (3), insbesondere eines Schienenfahrzeugverbundes (4) ist, mit einer Energieübertragungsvorrichtung (5), eingerichtet zur Übertragung der elektrischen Energie von der mobilen Energiebereitstellungsvorrichtung (1) zu dem mindestens einem elektrischen Verbraucher (2), **dadurch gekennzeichnet, dass** in einem ersten Modul (6A) ein erster Energiespeicher (7A) angeordnet ist, dass ein zweites Modul (6B) einen ersten Energiewandler (8A) zur Umwandlung nichtelektrischen Energie des Energiespeichers (7A) in elektrische Energie umfasst und dass in einem dritten Modul (6C) ein zweiter Energiespeicher (7B) und ein zweiter Energiewandler (8B) zur Umwandlung der Stromart und/oder der Wechselstromfrequenz und/oder des Spannungsniveaus und/oder der Stromstärke der elektrischen Energie und zusätzlich eine Sicherheitsvorrichtung (9A, 9C, 9D) zur Überwachung eines zulässigen Betriebsbereichs der mobilen Energiebereitstellungsvorrichtung (1) und eine Kommunikationsvorrichtung (9B) zur Steuerung der Energieübertragung mittels der Energieübertragungsvorrichtung (5) angeordnet sind.

2. Mobile Energiebereitstellungsvorrichtung (1) nach Anspruch 1, **dadurch gekennzeichnet, dass** der erste Energiespeicher (7A) ein Tank ist, der elementaren Wasserstoff und/oder eine wasserstoffhaltige Verbindung und/oder einen anderen Kraftstoff im gasförmigen oder flüssigen Aggregatzustand enthält.

3. Mobile Energiebereitstellungsvorrichtung (1) nach einem der Ansprüche 1 oder 2, **dadurch gekennzeichnet, dass** der erste Energiewandler (8A) eine Brennstoffzelle ist.

4. Mobile Energiebereitstellungsvorrichtung (1) nach Anspruch 3, **dadurch gekennzeichnet, dass** zwischen dem ersten Energiespeicher (7A) und der Brennstoffzelle (8A) ein Reformer zur Gewinnung von elementarem Wasserstoff angeordnet ist.

5. Mobile Energiebereitstellungsvorrichtung (1) nach einem der Ansprüche 1 oder 2, **dadurch gekennzeichnet, dass** der erste Energiewandler (8A) eine Kombination aus Verbrennungskraftmaschine und elektrischem Generator ist.

6. Mobile Energiebereitstellungsvorrichtung (1) nach einem der Ansprüche 1 bis 5, **dadurch gekennzeichnet, dass** der zweite Energiewandler (8B) ein Gleichstromwandler und/oder ein Wechselrichter ist.

7. Mobile Energiebereitstellungsvorrichtung (1) nach einem der Ansprüche 1 bis 6, **dadurch gekennzeichnet, dass** die Energieübertragungsvorrichtung (5) ein Verbindungskabel zum Anschließen an eine Koppelvorrichtung des Schienenfahrzeugs (11B), auf dem die Energiebereitstellungsvorrichtung (1, 1A) angeordnet ist und/oder zum Anschließen an eine Koppelvorrichtung des Schienenfahrzeuges (3, 11C), auf dem mindestens ein elektrischer Verbraucher (2) und/oder elektrischer Speicher (8C) angeordnet sind, ist.

8. Mobile Energiebereitstellungsvorrichtung (1) nach einem der Ansprüche 1 bis 7, **dadurch gekennzeichnet, dass** ein dritter Energiespeicher (7C) zwischen einem schienenfahrzeugseitigen Ende der Energieübertragungsvorrichtung (5) und dem mindestens einem elektrischen Verbraucher (2) angeordnet ist.

9. Mobile Energiebereitstellungsvorrichtung (1) nach einem der Ansprüche 1 bis 8, **dadurch gekennzeichnet, dass** die Sicherheitsvorrichtung (9A) mit einer Messwerterfassungsvorrichtung (9C, 9D) ausgestattet ist, die vorgesehen ist, Messwerte von Betriebsgrößen, wie Temperatur der Energiebereitstellungsvorrichtung (1) und ihrer Teilvorrichtungen (6A, 6B, 6C, 7A, 7B, 7C, 8A, 8B) sowie Kapazität und Ladezustand der Energiespeicher (7A, 7B, 7C), zu erfassen.

10. Mobile Energiebereitstellungsvorrichtung (1) nach Anspruch 9, **dadurch gekennzeichnet, dass** die Kommunikationsvorrichtung (9B) ausgestattet ist, aufgrund der Messwerte der Messwerterfassungsvorrichtung (9C, 9D) und/oder weiterer charakteristischer Kennwerte wie Nennspannung und/oder Nennstrom und/oder einstellbarer Parameter wie Ladezeit und Ladeleistung, die Energieübertragung zum mindestens einen elektrischen Verbraucher (2) mittels der Energieübertragungsvorrichtung (5) zu steuern.

11. Mobile Energiebereitstellungsvorrichtung (1) nach einem der Ansprüche 1 bis 10, **dadurch gekennzeichnet, dass** die drei Module (6A, 6B, 6C), die Sicherheitsvorrichtung (9A) und die Kommunikationsvorrichtung (9B) der mobilen Energiebereitstellungsvorrichtung (1) im Inneren eines Behälters (1A), insbesondere eines Containers mit Standardabmessungen angeordnet sind.

12. Mobile Energiebereitstellungsvorrichtung (1) nach Anspruch 11, **dadurch gekennzeichnet, dass** der Behälter (1A) auf einem Straßenfahrzeug (11A) und/oder Schienenfahrzeug (11A, 11B) und/oder einer stationären schienenfahrwegseitigen Vorrichtung (15) angeordnet ist.

Fig. 1

Fig. 2

Fig. 3

## Fig. 4

## Fig. 5

## Fig. 6

## Fig. 7

Europäisches
Patentamt

European
Patent Office

Office européen
des brevets

# EUROPÄISCHER RECHERCHENBERICHT

Nummer der Anmeldung

EP 24 22 0204

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | AU 2022 417 276 A1 (CANADIAN PACIFIC RAILWAY COMPANY [CA]) 21. September 2023 (2023-09-21) | 1-12 | INV. B60L1/00 B60L50/70 |
| Y | * Absätze [0018], [0023], [0034] - [0036], [0039], [0041] - [0045], [0051], [0058], [0059], [0070], [0075] - [0078], [0082]; Abbildungen 1-10B * ----- | 7,8,11, 12 | B60L53/53 B60L53/54 B60L53/57 |
| X | EP 4 230 463 A1 (HP3 REAL GMBH [AT]) 23. August 2023 (2023-08-23) | 1 | |
| Y | * Absätze [0018], [0036] - [0041]; Abbildungen 1-8 * ----- | 7,8 | |
| X | US 2008/121136 A1 (MARI JORGE [DE] ET AL) 29. Mai 2008 (2008-05-29) * Absätze [0025] - [0029]; Abbildungen 1-8 * ----- | 1 | |
| Y | DE 10 2019 213662 A1 (ROBEL BAHNBAUMASCHINEN GMBH [DE]) 11. März 2021 (2021-03-11) * Absätze [0017], [0034]; Abbildungen 1-3 * ----- | 11,12 | |

RECHERCHIERTE
SACHGEBIETE (IPC)

B60L

Der vorliegende Recherchenbericht wurde für alle Patentansprüche erstellt

| Recherchenort | Abschlußdatum der Recherche | Prüfer |
|---|---|---|
| Den Haag | 2. Mai 2025 | Schury, Dominik |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 22 0204

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-05-2025

| Im Recherchenbericht angeführtes Patentdokument | Datum der Veröffentlichung | Mitglied(er) der Patentfamilie | Datum der Veröffentlichung |
|---|---|---|---|
| AU 2022417276 A1 | 21-09-2023 | AU 2022417276 A1<br>CA 3170951 A1<br>US 2024239385 A1 | 21-09-2023<br>28-12-2022<br>18-07-2024 |
| EP 4230463 A1 | 23-08-2023 | AT 525925 A1<br>DE 202023002693 U1<br>EP 4230463 A1 | 15-09-2023<br>01-02-2024<br>23-08-2023 |
| US 2008121136 A1 | 29-05-2008 | US 2008121136 A1<br>WO 2008067033 A1 | 29-05-2008<br>05-06-2008 |
| DE 102019213662 A1 | 11-03-2021 | DE 102019213662 A1<br>WO 2021048113 A1 | 11-03-2021<br>18-03-2021 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102019213662 A1